# FASCICULE DE BREVET EUROPEEN

(11) **EP 2 151 608 B1**
(45) Date de publication et mention de la délivrance du brevet: **29.06.2011**
(21) Numéro de dépôt: 09167275.8
(22) Date de dépôt: 05.08.2009
(51) Int. Cl.: F16H 59/10, F16H 59/04, F16H 59/68

(54) **Procédé de vérification du fonctionnement d'un détecteur de point mort d'une boîte de vitesses d'un véhicule automobile**
Verfahren zur Prüfung des Betriebs eines Leerlaufdetektors eines Getriebes eines Kraftfahrzeuges
Method for checking the operation of a neutral gear detector of a gearbox of a motor vehicle

(30) Priorité: 06.08.2008 FR 0855434
(43) Date de publication de la demande: 10.02.2010
(73) Titulaire: Peugeot Citroën Automobiles SA, 78140 Vélizy-Villacoublay (FR)
(72) Inventeur: Siegfried, Adrien, 92250 La Garenne Colombes (FR)

(56) Documents cités:
- EP-A- 0 949 430
- DE-A1- 19 852 227
- DE-A1-102007 013 458
- FR-A- 2 638 230
- FR-A- 2 818 725
- US-A- 5 879 267

## Description

La présente invention se rapporte à un procédé de vérification du fonctionnement d'un détecteur de point mort d'une boîte de vitesses d'un véhicule automobile.

Le domaine technique de l'invention est, d'une façon générale, celui des boîtes de vitesses manuelles. Plus particulièrement, l'invention concerne un moyen permettant, en usine, de vérifier le fonctionnement d'un détecteur de point mort de la boîte de vitesses.

Ce détecteur a récemment été développé dans le cadre de l'implantation d'une technologie dite technologie Stop and Start (STT) sur des boîtes de vitesses manuelles. La technologie STT gère l'arrêt du moteur lorsque le véhicule s'arrête pendant une période prédéfinie, par exemple devant un feu rouge, et qui démarre automatiquement le moteur lorsque le conducteur appuie à nouveau sur la pédale d'embrayage (sur une volonté conducteur). Cette technologie diminue significativement la consommation et la pollution des véhicules et permet notamment de passer les normes Euro 5.

Pour des raisons de sécurité, il est indispensable de connaître la position de la boîte de vitesses à l'arrêt avant de démarrer le moteur à nouveau. En effet, il faut que la boîte de vitesses soit au point mort, c'est-à-dire sans rapport de vitesse engagé, pour éviter une propulsion vers l'avant du véhicule lors d'un démarrage automatique.

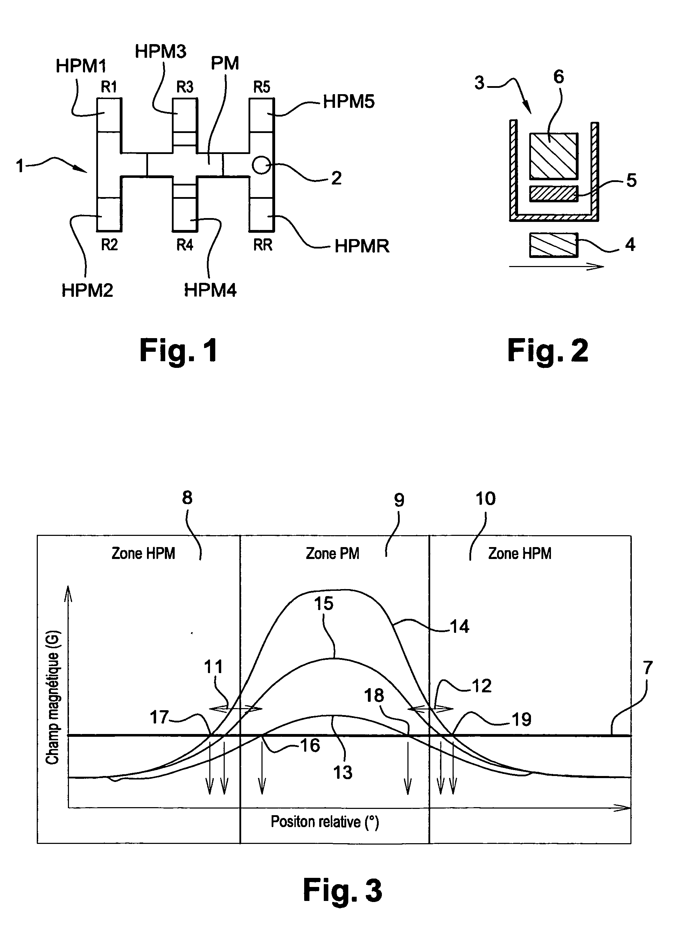

Différentes zones d'une grille 1 de boîte de vitesse sont représentées schématiquement sur la figure 1.

On distingue une zone centrale PM de point mort et, dans cet exemple, six zones HPM1 à HPMR hors point mort correspondant chacune à un rapport de boîte R1, R2, R3, R4, R5 et RR. Le conducteur actionne un levier 2 qui est mobile au sein de cette grille 1.

Dans l'état de la technique, on connaît l'enseignement des documents suivants.

Le document EP0838001 divulgue un entraînement de véhicule comprenant une boite de vitesses manuelle synchronisée via le contrôle d'une commande électronique et comportant un système de commutation pour surveiller son état de vitesse (neutre ou engagé).

Le document EP1003186 divulgue un procédé de détection de la position d'un commutateur sélecteur, en particulier dans le cas d'un véhicule automobile utilisant des informations fournies par le commutateur sélecteur lui-même et utilisant également des actionneurs magnétiques, en particulier des sondes de Hall.

Le document FR2638230 divulgue un dispositif de détermination de la position d'un levier de changement de vitesses grâce, par exemple, à des capteurs à effet Hall.

Le document FR2818725, considéré comme étant l'état de la technique le plus proche, divulgue un procédé d'acquisition et d'analyse de la position d'un levier de sélection dans la voie de déplacement de ce même levier utilisant au moins deux capteurs de position dans le cas d'une boite de vitesses automatisée.

Le document EP 0 949 430 divulgue un procèdé de calibration d'un détecteur du point mort.

Les détecteurs de point mort sont typiquement connectés à un calculateur de contrôle, et comportent le plus souvent un capteur à effet Hall tel que représenté schématiquement sur la figure 2.

Un tel capteur 3 comprend une cible aimantée 4 mobile, un sonde 5 de Hall, et un aimant 6. Ces éléments sont montés dans un boîtier du capteur 3 et la présence d'un joint assure l'étanchéité entre le capteur et le carter de la boite de vitesse sur laquelle il est fixé. La cible 4 est destinée à être fixée, dans un exemple, sur une tige d'actionnement (non représentée) des rapports R1, R2, R3, R4, R5 et RR de boîte de vitesses. La tige est mobile en rotation et en translation sur des courses limitées prédéfinies. La tige est commandée, via une tringlerie de transmission, par le levier 2. La course en translation de la tige est de l'ordre de quelques centimètres et la course en rotation totale est en général d'environ 40°.

La sonde 5 de Hall est apte à mesurer un champ magnétique pour déterminer la position et l'orientation de la cible 4 dans l'espace et pour en déduire la position du levier et l'état de la boîte de vitesses.

Un exemple de signal émis par de ce type de capteur 3 est représenté graphiquement sur la figure 3. Sur ce graphique, on définit en abscisse une position relative de la cible 4, et en ordonnée, le champ magnétique mesuré par le capteur 3. La position relative de la cible 4 est ici exprimée en degrés. L'unité du champ magnétique dans le système international est le Tesla (T).

On constate qu'au dessus d'un certain niveau, droite 7, de champ magnétique, le calculateur de contrôle considère la boîte de vitesses comme étant au point mort, en Zone 9 PM.

En dessous de ce niveau 7 de champ magnétique, le calculateur de contrôle considère la boîte de vitesses comme étant hors point mort, en zone HPM.

La droite 7 est typiquement préétablie en fonction d'essais expérimentaux ou de calculs et simulations prenant en compte toutes les dispersions du système à contrôler.

On distingue, hors point mort, une première zone 8 HPM correspondant à un premier rapport de boîte, par exemple la troisième vitesse R3, et une deuxième zone 10 HPM correspondant à un deuxième rapport de boîte, par exemple la quatrième vitesse R4.

Il existe, dans la pratique, une première zone de transition 11 entre la première zone 8 HPM et la zone 9 PM, ainsi qu'une deuxième zone de transition 12 entre la deuxième zone 10 HPM et la zone 9 PM. L'existence de ces zones de transition 11 et 12 s'explique par l'influence de nombreux phénomènes mécaniques sur la précision des mesures. Ces divers phénomènes dégradants sont décrits plus en détails dans la suite de la description.

Des courbes 13 à 15 révèlent les valeurs du signal délivré par trois capteurs différents en fonction de la position du levier 2. Les courbes 13 et 14 correspondent à des capteurs, respectivement en limite de défaut et d'excès par rapport à une tolérance acceptable.

La première zone de transition 11 est ainsi délimitée par une première intersection 16 de la courbe 13 avec la droite 7 et par une première intersection 17 de la courbe 14 avec la droite 7.

La deuxième zone de transition 12 est délimitée par une deuxième intersection 18 de la courbe 13 avec la droite 7 et par une deuxième intersection 19 de la courbe 14 avec la droite 7.

La courbe 15, correspondant à un capteur moyen, apparaît comme étant plus proche d'une courbe théorique de champ magnétique mesurée expérimentalement pour un capteur idéal.

Des défaillances techniques ou des dérèglements du capteur peuvent engendrer des zones de transition trop importantes et donc des détections de point mort erronées.

Une des causes de mauvais fonctionnement du capteur est l'état dans lequel il est livré par le fournisseur. Par exemple, deux joints d'étanchéité sont montés au lieu d'un seul, ou aucun joint n'est monté ; sa propreté peut être insuffisante, il peut être mal calibré, ou détérioré lors d'opérations de manipulation, de vissage.

Une autre cause de mauvais fonctionnement d'un tel capteur est son montage en usine qui peut engendrer une détérioration du joint ou du connecteur, une présence de bavure, une sortie du joint de sa gorge qui se positionne en appui sur une face d'appui du capteur, une présence de copeaux sur le capteur, au montage, due à un manque de propreté du poste de travail, une mauvaise réalisation d'un alésage du carter de la boîte de vitesses, un diamètre non-conforme, ou encore un état de surface non-conforme.

Peuvent également dégrader les mesures réalisées par le capteur, une détérioration de la connectique lors du vissage du capteur par l'embout de visseuse, un collage de copeaux ou salissure ou rondelle sur le capteur dû au magnétisme de ce dernier, une détérioration du fonctionnement du capteur par proximité d'un aimant ou d'une zone magnétique sur le poste de montage, une dégradation du capteur ou de sa connectique en manipulation lors de sa mise sur palettes ou du transport de la boîte de vitesse.

Le mauvais fonctionnement du capteur peut aussi provenir de la qualité de la cible 4 livrée par le fournisseur. Elle peut présenter des bavures, être inexistante, cassée ou détériorée, non-conforme, par exemple surdimensionnée, ou aimantée par la présence de copeaux. Le type de doigt de passage monté par le fournisseur peut aussi être mauvais.

Enfin, le capteur peut être détérioré par la cible 4, ou par un mauvais positionnement radial et axial. Plus particulièrement, il peut y avoir un jeu axial ou angulaire avec le doigt passage de vitesses. Il peut également y avoir des interactions avec des éléments extérieurs tels que des champs magnétiques en usine ou chez le fournisseur, ce qui crée de l'électrostatisme.

Dans le cas de telles défaillances du capteur de point mort, le véhicule risque de se déplacer de façon inattendue et dangereuse. Deux cas de figures sont notamment possibles :
- le véhicule peut démarrer de façon intempestive alors que le conducteur ne l'a pas demandé et que, par exemple, un piéton est situé devant le capot,
- le véhicule peut ne pas démarrer alors que le conducteur l'a demandé et qu'il est situé, par exemple, sur une voie ferrée.

Actuellement, il n'existe aucun moyen permettant de vérifier le bon fonctionnement d'un détecteur de point mort d'une boîte de vitesses d'un véhicule automobile.

La gravité d'un tel risque explique la nécessité de garantir un niveau de qualité de détection de point mort proche de la perfection. Dans l'invention, on a eu l'idée de mettre en place dans les usines un moyen permettant de vérifier que le détecteur de point mort est robuste et est conforme à un capteur parfait, idéal.

Afin de maitriser la qualité de la détection de point mort, on contrôle le détecteur en sortie d'usine, par des tests en fin de ligne de production.

Le procédé selon l'invention permet de prendre en compte toutes les contraintes de l'usine, il est :
- simple de mise en oeuvre puisque il n'y a pas nécessité d'utiliser un actionneur avec une mesure de course angulaire combinée avec le signal du capteur en temps réel,
- peu coûteux,
- rapide, de l'ordre de dix secondes en tout par boîte, alors qu'avec un moyen faisant une mesure de course, il est nécessaire de faire du quasi-statique pour s'affranchir des effets dynamiques et le temps de cycle est plus que doublé.

Ce type de contrôle simple et judicieux permet de garantir à 100% le bon fonctionnement du détecteur de point de mort. L'idée de l'invention est de mesurer la compatibilité du signal délivré par ce capteur à un ou des seuils quand ce capteur se trouve dans la zone PM et en début de course de des zones HPM de la boite de vitesses.

L'invention a donc pour objet un procédé de vérification du fonctionnement d'un détecteur de point mort d'une boîte de vitesses d'un véhicule de type automobile dans lequel
- on munit un levier de changement de vitesse, actionné par un conducteur du véhicule, d'un détecteur à effet Hall,
- ce détecteur à effet Hall comportant une cible magnétique fixée sur une extrémité du levier, et un aimant et un capteur à effet Hall fixes par rapport à la boîte de vitesse,
- le levier se déplaçant entre une position de point mort et une première position hors point mort correspondant à un premier rapport de boîte,
- on munit le véhicule d'un calculateur de contrôle recevant des signaux du détecteur, la fonction de détection de point mort comportant des étapes dans lesquelles
- on mesure, à l'aide du capteur, une évolution de champ magnétique entre la cible et le capteur,
- on déduit de cette évolution une position et une orientation du levier dans l'espace pour détecter des passages au point mort,
   caractérisé en ce que, en sortie d'usine,
- on établit expérimentalement et/ou par simulation, pour la position point mort à l'équilibre du levier, un premier seuil minimal de champ magnétique,
- on mesure, en position point mort à l'équilibre, une première valeur du champ magnétique que l'on compare au premier seuil,
   - si la première valeur est inférieure au premier seuil, on interprète cette première inégalité comme étant représentative d'un mauvais fonctionnement du détecteur, et on provoque une réparation,
   - si la première valeur est supérieure au premier seuil, on interprète cette deuxième inégalité comme étant représentative d'un bon fonctionnement du détecteur.

Selon une mise en oeuvre, il comporte les étapes suivantes :
- on établit expérimentalement et/ou par simulation, pour la première position hors point mort, un deuxième seuil maximal de champ magnétique,
- on mesure, en position hors point mort, une deuxième valeur du champ magnétique que l'on compare au deuxième seuil,
   - si la deuxième valeur est supérieure au deuxième seuil, on interprète cette troisième inégalité comme étant représentative d'un mauvais fonctionnement du détecteur, et on provoque une réparation,
   - si la deuxième valeur est inférieure au deuxième seuil, on interprète cette quatrième inégalité comme étant représentative d'un bon fonctionnement du détecteur.

Selon une mise en oeuvre, on mesure, en position hors point mort, la deuxième valeur en début de crabotage du premier rapport de vitesse.

Selon une mise en oeuvre, il comporte les étapes suivantes :
- on établit expérimentalement et/ou par simulation, pour une deuxième position hors point mort correspondant à un deuxième rapport de boîte, un troisième seuil maximal de champ magnétique,
- on mesure, pour cette position, une troisième valeur de champ magnétique que l'on compare au troisième seuil,
   - si la troisième valeur est supérieure au troisième seuil, on interprète cette cinquième inégalité comme étant représentative d'un mauvais fonctionnement du détecteur, et on provoque une réparation,
   - si la troisième valeur est inférieure au troisième seuil, on interprète cette sixième inégalité comme étant représentative d'un bon fonctionnement du détecteur.

Selon une mise en oeuvre, le premier rapport de boîte correspond à un premier déplacement simple du levier pour engager une vitesse, et en ce que le deuxième rapport de boîte correspond à un deuxième déplacement simple en direction opposée au premier.

Selon une mise en oeuvre, on répète les étapes d'établissement de seuil maximal, de mesure de champ magnétique, de comparaison au seuil, et d'interprétation pour chacun des autres rapports de vitesse que comporte la boîte.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- figure 1, déjà décrite : une représentation schématique d'une grille de boîte de vitesses,
- figure 2, déjà décrite : une représentation schématique d'un capteur à effet Hall,
- figure 3, déjà décrite : une représentation graphique d'une relation entre une position d'un levier de boîte de vitesses et un champ magnétique mesuré par le capteur à effet Hall,
- figure 4 : une représentation graphique du procédé selon l'invention,
- figure 5 : une représentation synoptique d'un exemple de mise en oeuvre du procédé selon l'invention montrant le test à effectuer ainsi que les conclusions du test sur la conformité de la fonction.

Pour rappel, le fonctionnement d'un détecteur de point mort d'une boîte de vitesses d'un véhicule de type automobile comporte des étapes dans lesquelles
- on munit le levier 2 de changement de vitesse, actionné par un conducteur du véhicule, d'un détecteur à effet Hall tel que celui décrit avec la figure 2,
- ce détecteur à effet Hall comportant une cible magnétique 4 fixée sur une extrémité du levier, et un aimant 6 et un capteur à effet Hall fixes par rapport à la boîte de vitesse,
- le levier 2 se déplaçant entre la position de point mort PM et au moins une première position hors point mort, par exemple en zone HPM3, correspondant à un premier rapport de boîte, par exemple la troisième vitesse R3,
- on munit le véhicule d'un calculateur de contrôle recevant des signaux du détecteur,
- on mesure, à l'aide du capteur, une évolution de champ magnétique entre la cible 4 et l'aimant 6,
- on déduit de cette évolution une position et une orientation du levier 2 dans l'espace pour détecter des passages au point mort.

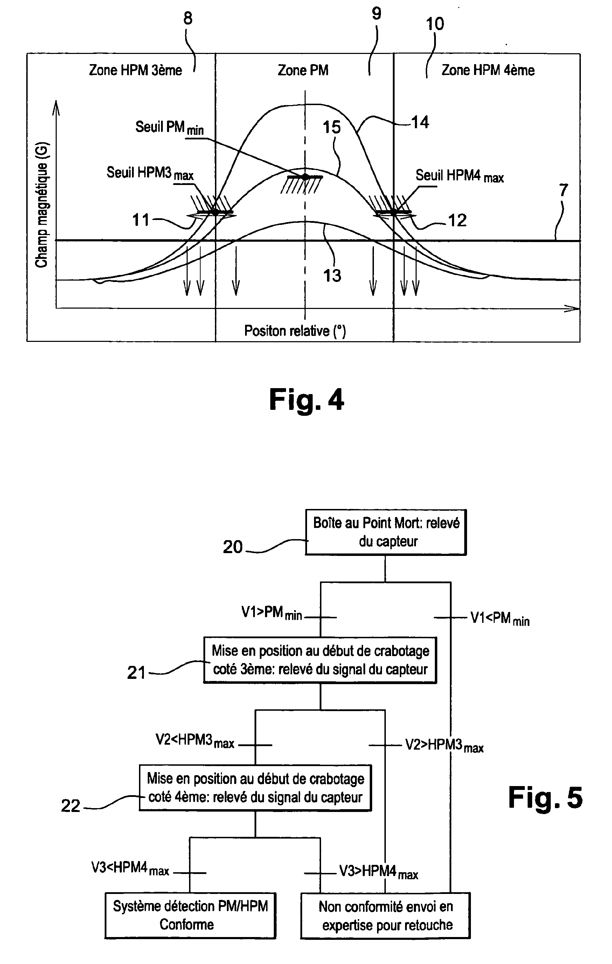

Le même exemple de signal, émis par de ce type de capteur, qu'à la figure 3, est représenté graphiquement sur la figure 4.

Des défaillances techniques du capteur peuvent engendrer des zones de transition trop importantes et donc des détections de point mort erronées.

Le procédé de vérification du fonctionnement du détecteur de point mort d'une boîte de vitesses selon l'invention comporte des étapes dans lesquelles, en sortie d'usine, on établit expérimentalement et/ou par simulation, pour la position point mort PM à l'équilibre du levier 2, un premier seuil minimal PMmin de champ magnétique, et on mesure pour cette position une première valeur V1 du champ magnétique d'un capteur réel monté que l'on compare au premier seuil PMmin. Deux cas de figure sont alors possibles :
- si la première valeur V1 est inférieure au premier seuil PMmin, on interprète cette première inégalité comme étant représentative d'un mauvais fonctionnement du détecteur, et on provoque une réparation,
- si la première valeur V1 est supérieure au premier seuil PMmin, courbes 14 et 15, on interprète cette deuxième inégalité comme étant représentative d'un bon fonctionnement du détecteur.

Dans un exemple préféré de réalisation du procédé selon l'invention, on établit expérimentalement et/ou par simulation, pour la première position hors point mort HPM3, un deuxième seuil maximal HPM3max de champ magnétique pour un capteur idéal. Puis pour un capteur réel monté, et alors que le levier 2 se trouve dans une position de début de zone HPM de la boite de vitesses, on mesure une deuxième valeur V2 du champ magnétique que l'on compare au deuxième seuil HPM3max. Deux cas de figure sont alors possibles :
- si la deuxième valeur V2 est supérieure au deuxième seuil HPM3max, courbe 14, on interprète cette troisième inégalité comme étant représentative d'un mauvais fonctionnement du détecteur, et on provoque une réparation,
- si la deuxième valeur V2 est inférieure au deuxième seuil HPM3max, courbe 15, on interprète cette quatrième inégalité comme étant représentative d'un bon fonctionnement du détecteur.

Dans un exemple, on établit expérimentalement et/ou par simulation, pour la deuxième position hors point mort HPM4 correspondant à un deuxième rapport R4 de boîte, un troisième seuil maximal HPM4max de champ magnétique pour un capteur idéal. Puis pour un capteur réel monté, et alors que le levier 2 se trouve dans une position de début de zone HPM de la boite de vitesses, on mesure une troisième valeur V3 de champ magnétique que l'on compare au troisième seuil HPM4max. Deux cas de figure sont alors possibles :
- si la troisième valeur V3 est supérieure au troisième seuil HPM4max, courbe 14, on interprète cette cinquième inégalité comme étant représentative d'un mauvais fonctionnement du détecteur, et on provoque une réparation,
- si la troisième valeur V3 est inférieure au troisième seuil HPM4max, courbe 15, on interprète cette sixième inégalité comme étant représentative d'un bon fonctionnement du détecteur.

Dans un exemple, on mesure, en position hors point mort, la deuxième valeur V2 en début de crabotage du premier rapport de vitesse.

Le crabotage est une phase du changement de vitesse, succédant à la synchronisation, au cours de laquelle deux pièces viennent s'accoupler par l'engagement des dents de l'une d'elles dans des logements correspondants aménagés dans l'autre pièce. Les crabots, aussi appelés cannelures de crabotage, sont des dents, formant une espèce de crénelage, qui permettent d'accoupler, donc de craboter, un pignon fou et un manchon baladeur du synchroniseur. Ainsi, lors du crabotage, le manchon baladeur vient engrener ses crabots sur ceux du pignon fou.

La synchronisation est une phase du changement de vitesse, précédant le crabotage, au cours de laquelle les éléments actifs de l'embrayage de synchronisation du synchroniseur entrent en contact et tendent à égaliser leurs vitesses sous la poussée d'une fourchette de commande. Le crabotage se fait donc au moment où le pignon fou et le manchon atteignent la même vitesse de rotation. Le début de crabotage correspond à la course où les dents du manchon baladeur viennent en contact avec les dents du pignon fou.

Dans un exemple préféré de réalisation du procédé selon l'invention, le premier rapport de boîte correspond à un premier déplacement simple du levier pour engager une vitesse, et en ce que le deuxième rapport de boîte correspond à un deuxième déplacement simple en direction opposée au premier.

Dans une variante, on répète les étapes d'établissement de seuil maximal, de mesure de champ magnétique, de comparaison au seuil, et d'interprétation pour chacun des autres rapports RR ; R1 ; R2 ; R5 de vitesse que comporte la boîte.

La course à parcourir par le moyen pour se positionner au début de crabotage est repérée par une butée mécanique propre au moyen. Au besoin, on place un repère mécanique en face de chaque zone de transition et l'opérateur doit placer le levier 2 en regard du repère dans le cas d'un actionnement manuelle. Il peut être également envisagé un actionnement automatique ou un actionneur vient positionner le levier 2 contre les butées mécaniques propres au moyen. Pour trois seuils à mesurer, la vérification prend neuf secondes : moins de dix secondes.

Le procédé comporte donc le lancement de l'opération par une étape 20 (figure 5). L'étape 20 est initialisée par appui par l'opérateur sur une manette de commande d'un système informatique d'acquisition non représenté. Au cours de l'étape 20 le système d'acquisition prélève la valeur V1 et émet un signal, par exemple lumineux vert ou rouge, selon la satisfaction ou non de la valeur mesurée V1 au seuil PMmin. L'opérateur provoque alors soit le démontage du capteur pour réparation si le test n'est pas conforme soit le passage à une étape suivante s'il est conforme. Au cours d'une étape suivante 21, l'opérateur appuie à nouveau sur la manette de commande, ou sur une autre manette pour provoquer l'étape 21. En variante, il attend trois secondes (par exemple en comptant jusqu'à trois) dans la position à l'équilibre avant de passer au début du crabotage, en zone 11. A cet effet il déplace le levier 2 jusqu'à la butée mécanique du moyen. Le système informatique acquiert alors la valeur V2 qu'il compare au seuil HPM3max. Puis le système informatique émet un autre signal, appliqué sur une même lampe ou sur une autre lampe. Une opération 22 suivante permet de tester de la même manière la compatibilité du capteur au seuil HPM4max.

En agissant ainsi, on peut faire s'allumer devant l'opérateur une, trois ou sept lampes (pour six rapports) qui, si elles sont toutes vertes confirment que le capteur intégré sur la boite de vitesses est en bon état. Eventuellement le passage à une étape de montage suivante ne peut se faire que si les un, trois ou sept signaux ont été mesurés comme conformes. Sinon, l'état des lampes ou des signaux peut donner une indication sur la nature du défaut constaté pour le capteur, avant son remplacement.

## Revendications

1. Procédé de vérification du fonctionnement d'un détecteur de point mort (Zone PM) d'une boîte (1) de vitesses d'un véhicule de type automobile dans lequel
- on munit un levier (2) de changement de vitesse, actionné par un conducteur du véhicule, d'un détecteur à effet Hall,
- ce détecteur à effet Hall comportant une cible magnétique (4) fixée sur une extrémité du levier, et un aimant et un capteur (3) à effet Hall fixes par rapport à la boîte de vitesse,
- le levier se déplaçant entre une position de point mort et une première position hors point mort (Zone HPM3) correspondant à un premier rapport (R3) de boîte,
- on munit le véhicule d'un calculateur de contrôle recevant des signaux du détecteur, la fonction de détection de point mort comportant des étapes dans lesquelles
- on mesure, à l'aide du capteur, une évolution de champ magnétique entre la cible et le capteur,
- on déduit de cette évolution une position et une orientation du levier dans l'espace pour détecter des passages au point mort,
**caractérisé en ce que**, en sortie d'usine,
- on établit expérimentalement et/ou par simulation, pour la position point mort à l'équilibre du levier, un premier seuil minimal (Seuil PMmin) de champ magnétique,
- on mesure, en position point mort à l'équilibre, une première valeur (V1) du champ magnétique que l'on compare au premier seuil,
- si la première valeur est inférieure au premier seuil, on interprète cette première inégalité comme étant représentative d'un mauvais fonctionnement du détecteur, et on provoque une réparation,
- si la première valeur est supérieure au premier seuil, on interprète cette deuxième inégalité comme étant représentative d'un bon fonctionnement du détecteur.

2. Procédé selon la revendication 1, **caractérisé en ce que**
- on établit expérimentalement et/ou par simulation, pour la première position hors point mort, un deuxième seuil maximal (Seuil HPM3max) de champ magnétique,
- on mesure, en position hors point mort, une deuxième valeur (V2) du champ magnétique que l'on compare au deuxième seuil,
- si la deuxième valeur est supérieure au deuxième seuil, on interprète cette troisième inégalité comme étant représentative d'un mauvais fonctionnement du détecteur, et on provoque une réparation,
- si la deuxième valeur est inférieure au deuxième seuil, on interprète cette quatrième inégalité comme étant représentative d'un bon fonctionnement du détecteur.

3. Procédé selon la revendication 2, **caractérisé en ce que**
- on mesure, en position hors point mort, la deuxième valeur en début de crabotage du premier rapport de vitesse.

4. Procédé selon l'une des revendications 2 à 3, **caractérisé en ce que**
- on établit expérimentalement et/ou par simulation, pour une deuxième position hors point mort (Zone HPM4) correspondant à un deuxième rapport (R4) de boîte, un troisième seuil maximal (Seuil HPM4max) de champ magnétique,
- on mesure, pour cette position, une troisième valeur (V3) de champ magnétique que l'on compare au troisième seuil,
- si la troisième valeur est supérieure au troisième seuil, on interprète cette cinquième inégalité comme étant représentative d'un mauvais fonctionnement du détecteur, et on provoque une réparation,
- si la troisième valeur est inférieure au troisième seuil, on interprète cette sixième inégalité comme étant représentative d'un bon fonctionnement du détecteur.

5. Procédé selon la revendication 4, **caractérisé en ce que** le premier rapport de boîte correspond à un premier déplacement simple du levier pour engager une vitesse, et **en ce que** le deuxième rapport de boîte correspond à un deuxième déplacement simple en direction opposée au premier.

6. Procédé selon l'une des revendications 1 à 5, **caractérisé en ce qu'**on répète les étapes d'établissement de seuil maximal, de mesure de champ magnétique, de comparaison au seuil, et d'interprétation pour chacun des autres rapports (RR ; R1 ; R2 ; R5) de vitesse que comporte la boîte.

## Claims

1. Process for checking the functioning of a neutral point (Zone PM) detector of a gearbox (1) of an automotive vehicle, in which
- a gear shift lever (2), activated by a vehicle driver, is supplied with a Hall effect detector,
- this Hall effect detector comprising a magnetic target (4), which is fixed to one end of the lever, and a magnet and a Hall effect sensor (3), which are fixed in relation to the gearbox,
- the lever shifting between a neutral point position and a first position outside the neutral point (Zone HPM3) corresponding to a first gearbox ratio (R3),
- the vehicle is supplied with a control calculator receiving signals from the detector, the neutral point detection function comprising steps in which
- using the sensor, a change in magnetic field between the target and the sensor is measured,
- from this change, a position and an orientation of the lever in space are deduced to detect movements to the neutral point, **characterized in that**, on leaving the factory,
- a first minimum magnetic field threshold (Threshold PMmin) is established, experimentally and/or by simulation, for the neutral point position at the equilibrium of the lever,
- in the neutral point position at the equilibrium, a first value (V1) of the magnetic field is measured, which is compared to the first threshold,
- if the first value is lower than the first threshold, this first inequality is interpreted as being representative of a malfunctioning of the detector, and a repair is brought about,
- if the first value is higher than the first threshold, this second inequality is interpreted as being representative of good functioning of the detector.

2. Process according to claim 1, **characterized in that**
- for the first position outside the neutral point, a second maximum magnetic field threshold (Threshold HPM3max) is established experimentally and/or by simulation,
- in the position outside the neutral point, a second value (V2) of the magnetic field is measured, which is compared to the second threshold,
- if the second value is higher than the second threshold, this third inequality is interpreted as being representative of a malfunctioning of the detector, and a repair is brought about,
- if the second value is lower than the second threshold, this fourth inequality is interpreted as being representative of good functioning of the detector.

3. Process according to claim 2, **characterized in that**
- in the position outside the neutral point, the second value is measured at the start of coupling of the first gear ratio.

4. Process according to one of claims 2 to 3, **characterized in that**
- for a second position outside the neutral point (Zone HPM4), corresponding to a second gearbox ratio (R4), a third maximum magnetic field threshold (HPM4max Threshold) is established experimentally and/or by simulation,
- for this position, a third value (V3) of the magnetic field is measured, which is compared to the third threshold,
- if the third value is higher than the third threshold, this fifth inequality is interpreted as being representative of a malfunctioning of the detector, and a repair is brought about,
- if the third value is lower than the third threshold, this sixth inequality is interpreted as being representative of good functioning of the detector.

5. Process according to claim 4, **characterized in that** the first gearbox ratio corresponds to a first simple shift of the lever to engage one gear, and **in that** the second gearbox ratio corresponds to a second simple shift in the direction opposite to the first.

6. Process according to one of claims 1 to 5, **characterized in that** the steps of establishment of a maximum threshold, measurement of the magnetic field, comparison with the threshold, and interpretation are repeated for each of the other gear ratios (RR; R1; R2; R5) of the gearbox.

## Patentansprüche

1. Verfahren zur Überprüfung der Funktionsweise eines Totpunktdetektors (PM-Zone) eines Schaltgetriebes (1) eines Kraftfahrzeugs, wobei
- ein Schalthebel (2), der von einem Fahrer des Fahrzeugs betätigt wird, mit einem Hall-Effekt-Detektor ausgestattet wird,
- dieser Hall-Effekt-Detektor eine magnetische Treffplatte (4), die an einem Ende des Hebels befestigt ist, und einen Magneten und einen Hall-Effekt-Sensor (3), die im Verhältnis zu dem Schaltgetriebe feststehen, umfasst,
- sich der Hebel zwischen einer Totpunktposition und einer ersten Position außerhalb des Totpunktes (HPM3-Zone), die einem ersten Gang (R3) des Getriebes entspricht, bewegt,
- das Fahrzeug mit einem Kontrollrechner ausgestattet wird, der Signale von dem Detektor empfängt, wobei die Funktion der Totpunkterfassung folgende Schritte umfasst:
- Messen anhand des Sensors einer Magnetfeldveränderung zwischen der Treffplatte und dem Sensor,
- Ableiten aus dieser Veränderung einer Position und einer Orientierung des Hebels im Raum, um Übergänge auf den Totpunkt zu erfassen,
**dadurch gekennzeichnet, dass** beim Verlassen des Werks
- versuchsweise und/oder durch Simulation für die Totpunktposition im Beharrungszustand des Hebels ein erster minimaler Magnetfeld-Schwellenwert (Schwelle PMmin) aufgestellt wird,
- in der Totpunktposition im Beharrungszustand ein erster Wert (V1) des Magnetfeldes gemessen wird, der mit dem ersten Schwellenwert verglichen wird,
- wenn der erste Wert kleiner als der erste Schwellenwert ist, diese erste Ungleichheit als stellvertretend für eine schlechte Funktionsweise des Detektors ausgelegt wird und eine Reparatur veranlasst wird,
- wenn der erste Wert größer als der erste Schwellenwert ist, diese zweite Ungleichheit als stellvertretend für eine richtige Funktionsweise des Detektors ausgelegt wird.

2. Verfahren nach Anspruch 1, **dadurch gekennzeichnet, dass**
- versuchsweise und/oder durch Simulation für die erste Position außerhalb des Totpunktes ein zweiter maximaler Magnetfeld-Schwellenwert (Schwelle HPM3max) aufgestellt wird,
- in der Position außerhalb des Totpunktes ein zweiter Wert (V2) des Magnetfeldes gemessen wird, der mit dem zweiten Schwellenwert verglichen wird,
- wenn der zweite Wert größer als der zweite Schwellenwert ist, diese dritte Ungleichheit als stellvertretend für eine schlechte Funktionsweise des Detektors ausgelegt wird und eine Reparatur veranlasst wird,
- wenn der zweite Wert kleiner als der zweite Schwellenwert ist, diese vierte Ungleichheit als stellvertretend für eine richtige Funktionsweise des Detektors ausgelegt wird.

3. Verfahren nach Anspruch 2, **dadurch gekennzeichnet, dass**
- in der Position außerhalb des Totpunktes der zweite Wert zu Beginn des Einkuppelns des ersten Ganges gemessen wird.

4. Verfahren nach einem der Ansprüche 2 bis 3, **dadurch gekennzeichnet, dass**
- versuchsweise und/oder durch Simulation für eine zweite Position außerhalb des Totpunktes (HPM4-Zone), die einem zweiten Gang (R4) des Getriebes entspricht, ein dritter maximaler Magnetfeld-Schwellenwert (Schwelle HPM4max) aufgestellt wird,
- für diese Position ein dritter Wert (V3) des Magnetfeldes gemessen wird, der mit dem dritten Schwellenwert verglichen wird,
- wenn der dritte Wert größer als der dritte Schwellenwert ist, diese fünfte Ungleichheit als stellvertretend für eine schlechte Funktionsweise des Detektors ausgelegt wird und eine Reparatur veranlasst wird,
- wenn der dritte Wert kleiner als der dritte Schwellenwert ist, diese sechste Ungleichheit als stellvertretend für eine richtige Funktionsweise des Detektors ausgelegt wird.

5. Verfahren nach Anspruch 4, **dadurch gekennzeichnet, dass** der erste Gang des Getriebes einer ersten einfachen Bewegung des Hebels entspricht, um einen Gang einzulegen, und dass der zweite Gang des Getriebes einer zweiten einfachen Bewegung in zu der ersten entgegengesetzter Richtung entspricht.

6. Verfahren nach einem der Ansprüche 1 bis 5, **dadurch gekennzeichnet, dass** die Schritte des Aufstellens eines maximalen Schwellenwertes, des Messens eines Magnetfeldes, des Vergleichens mit dem Schwellenwert und des Auswertens für jeden der anderen Gänge (RR; R1; R2; R5), die das Getriebe umfasst, wiederholt werden.
